# EUROPÄISCHE PATENTSCHRIFT

(11) **EP 2 288 880 B1**
(45) Veröffentlichungstag und Bekanntmachung des Hinweises auf die Patenterteilung: **17.10.2012**
(21) Anmeldenummer: 08773266.5
(22) Anmeldetag: 18.06.2008
(51) Int. Cl.: G01F 1/46, G01F 1/72, G01F 15/12

(54) **STAUDRUCKSONDE MIT DIFFERENZDRUCKERHÖHER**
DYNAMIC PRESSURE PROBE WITH PRESSURE DIFFERENCE AMPLIFIER
SONDE À PRESSION DYNAMIQUE À AMPLIFICATEUR DE PRESSION DIFFÉRENTIELLE

(43) Veröffentlichungstag der Anmeldung: 02.03.2011
(73) Patentinhaber: systec Controls Mess- und Regeltechnik GmbH, 82178 Puchheim (DE)
(72) Erfinder: BETZ, Oliver, 82194 Gröbenzell (DE); BAESSLER, Stefan, 81541 München (DE)
(74) Vertreter: Braun-Dullaeus, Karl-Ulrich
(86) Internationale Anmeldenummer: PCT/DE2008/000986
(87) Internationale Veröffentlichungsnummer: WO 2009/152787

(56) Entgegenhaltungen:
- DE-A1- 1 473 126
- DE-A1- 2 356 725
- DE-U1-202005 016 862
- DE-U1-202007 005 695
- GB-A- 191 221 864
- US-B2- 6 802 225

## Beschreibung

Die Erfindung betrifft eine Staudrucksonde, durch welche der Staudruck eines strömenden, mit Fremdstoffen durchsetzten Mediums gemessen wird.

Aus der WO2007/009409 ist eine Staudrucksonde mit einem strömungsmechanischen Differenzdruckerhöher bekannt, welche aufgrund konstruktiver Ausgestaltung in gewissem Masse bereits unempfindlich ist gegenüber in der Strömung mitgeführten Fremdstoffen.

Aus dem DE 23 56 725 ist eine Staudrucksonde bekannt, bei der die Enden der Messkanäle im Inneren der Staudrucksonde liegen und von einem Schlitz verdeckt sind. Der Schlitz durchbricht eine Anlauffläche der Sonde seitlich und über die gesamte Breite. Die seitlichen Öffnungen des Schlitzes an der Sonde bewirken aufgrund der die Sonde umfließenden Strömung, dass das mit Fremdstoffen durchsetzte Fluid an der Anlauffläche in den Schlitz eintritt und von dort seitlich wieder herausgesogen wird.

Das GB 21, 864 zeigt eine Sonde in Form eines länglich geformten Stifts mit glatter Oberfläche, dessen schmalen Enden in bzw. gegen die Strömung ausgerichtet sind. Die Enden weisen zentrale Schlitze auf, die an der Basis der Sonde jeweils in einen Messkanal münden

Das DE 14 73 126 A1 zeigt Messkanäle in einer elliptisch geformten Sonde, die senkrecht zur Strömung ausgerichtet sind.

Das US 6,802,225 B2 zeigt eine Sonde, deren Messkanäle in einem parallel zur Strömung ausgerichteten Rücksprung münden.

Es hat sich gezeigt, dass beim Einsatz der bekannten Staudrucksonde in stärker mit Fremdstoffen durchsetzten Medien, sich diese Fremdstoffe unter Umstanden dennoch im Bereich der Staufläche am Differenzdruckerhöher ansammeln können.

Es ist Aufgabe der Erfindung, eine Staudrucksonde, welche nach dem Prinzip des Staudruckerhöhers arbeitet zu schaffen, wobei diese Staudrucksonde noch unempfindlicher gegenüber in der Strömung mitgeführten Fremdstoffen ist.

Die Erfindung macht sich die Erkenntnis zu eigen, dass die Fremdstoffe eine sehr geringe Trägheit aufweisen und daher der Strömung direkt folgen, ein Verhalten, welche in der Fachwelt unter dem Begriff Partikelfolgeverhalten bekannt ist.

Unter Anwendung dieser Erkenntnis wurde in erfinderischer Weise die Sonde so ausgestaltet, dass die Strömungsrichtung im Nahfeld des Differenzdruckerhöhers nicht senkrecht zur Staufläche verläuft.

Die erfindungsgemäße Sonde hat einen Differenzdruckerhöher besonderer Ausgestaltung mit einer schrägen Anlauffläche gemäß Anspruch 1, auf welche die Strömung trifft und abgelenkt wird.

Der durch diese Ablenkung resultierende Richtungsvektor der Strömung im Nahfeld des Differenzdruckerhöher setzt sich zusammen aus einem Anteil senkrecht zur Staufläche und einem Anteil tangential zur Staufläche.

Der tangential verlaufende Anteil bewirkt, dass Fremdstoffe, welche stets der Strömung folgen an der Staufläche des Differenzdruckerhöhers vorbeigeführt werden. Eine Gefahr von Ablagerungen wird hierdurch vorteilhaft reduziert. Kurze Beschreibung der Zeichnungen

Die Erfindung wird anhand von mehreren Figuren näher erläutert, es zeigen:
- Figur 1: die Staudrucksonde in Seitenansicht, quer zur Strömung,
- Figur 2: die Staudrucksonde in Seitenansicht, längs zur Strömung
- Figur 3: die Staudrucksonde von unten betrachtet,
- Figur 4: einen Schnitt durch die Staudrucksonde gemäß Figur 2
- Figur 5: eine weitere Ausgestaltung der Staudrucksonde
- Figur 6: den Strömungsverlauf an der Staudrucksonde im Detail

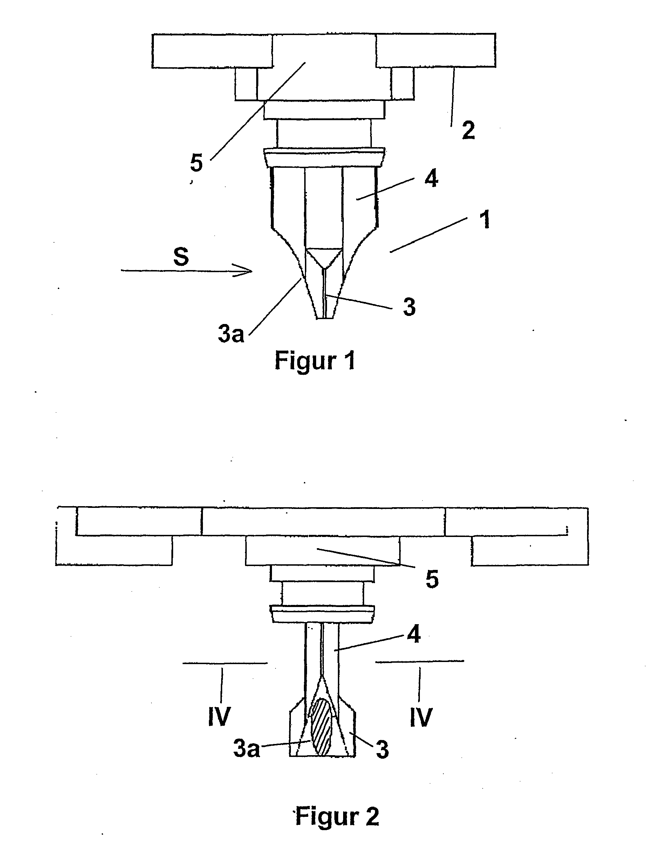

Die Seitenansicht der Sonde 1 in Figur 1 ist quer zur Strömungsrichtung S gewählt. Die Sonde 1 ist über Befestigungselemente 2 an einem hier nicht gezeichneten Rohr so befestigbar, dass die Staufläche 3a des Differenzdruckerhöhers 3 in Richtung der Strömung S zeigt.

Die Anlauffläche 3a des Differenzdruckerhöhers 3 hat einen rampenartigen Verlauf. Im Bereich der Anlauffläche 3 befindet sich eine in dieser Darstellung nicht sichtbare Öffnung. Diese Öffnung ist das Ende eines Kanals, der durch eine Verlängerung 4 nach oben in den Kopf 5 der Sonde 1 verläuft.

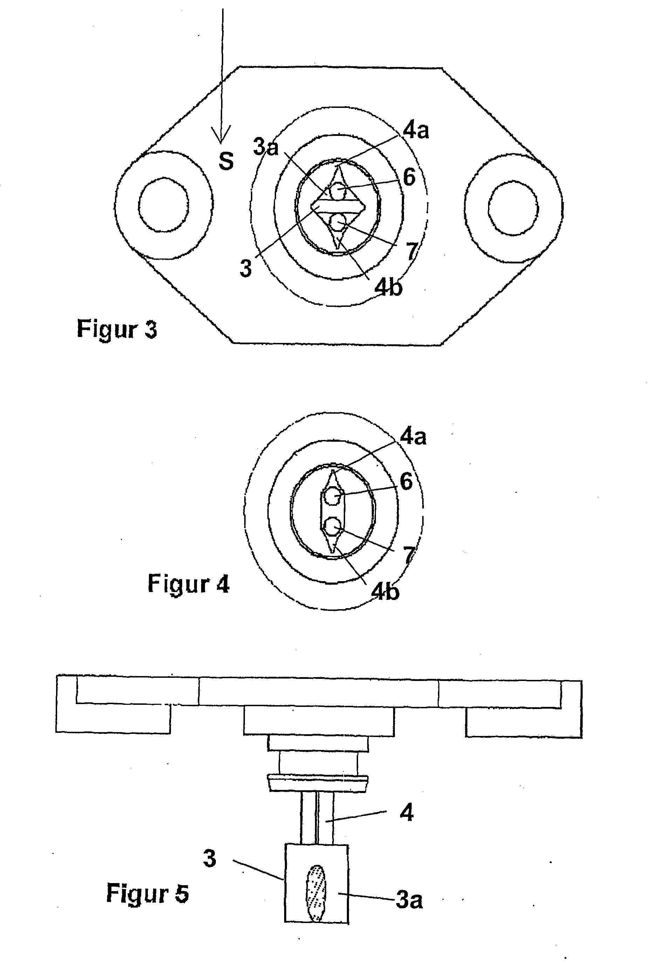

Auf der von der Strömung abgewandten Seite des Differenzdröckerhöhers 3 befindet sich ebenfalls eine Fläche, in der ebenfalls eine Öffnung und Bohrung vorhanden ist, die bis in den Kopf 5 der Sonde 1 führt. Die strömungsabgewandte Seite des Differenzdruckerhöhers ist in dieser Darstellung nicht sichtbar, Details hierzu sind in der Figur 3 zu sehen.

Durch die Wirkung des Differenzdruckerhöhers 3 entsteht in Abhängigkeit von der Strömung S ein Differenzdruck zwischen den beiden Öffnungen der Bohrungen.

Die Sonde 1 ist im Bereich des Differenzdruckerhöhers 3 auf der zur Strömung S zeigenden Seite und auf der von der Strömung abgewandten Seite in etwa symmetrisch aufgebaut.

Dieser symmetrische Aufbau hat den Vorteil, dass mit der Sonde 1 eine Strömung gemessen werden kann, egal aus welcher Richtung die Strömung kommt. Es ist mit dieser Sonde 1 daher auch sehr gut möglich Strömungen zu messen, die mit wechselnder Richtung in einem Rohr pulsieren.

Ebenso ist es natürlich auch möglich, den Aufbau asymmetrisch zu gestalten. Durch die asymmetrische Gestaltung ist es möglich die Anlauffläche optimiert für eine bevorzugte Strömungsrichtung zu gestalten.

Im Kopf 5 der Sonde 1 können auch Drucksensoren untergebracht sein, ebenso ist es möglich, vom Kopf 5 aus über Leitungen eine Verbindung zu Drucksensoren herzustellen.

Die Verlängerung 4 ist so gewählt, dass sich der Differenzdruckerhöher 3 und damit die Anlauffläche 3 a in einem Bereich des Rohres befinden, in welchem keine Randeffekte der Rohrwandung mehr vorhanden sind. Die Verlängerung 4 kann je nach Einsatztort der Sonde 1 unterschiedlich lang ausgestaltet sein.

Die Verlängerung 4 ihrerseits ist so ausgestaltet, dass sie geringen Strömungswiderstand aufweist.

Die Strömung S trifft nicht senkrecht sondern schräg auf die Anlauffläche 3a und wird hierdurch abgelenkt. Im Bereich der Öffnung zu dem Kanal 6 setzt sich der Richtungsvektor der Strömung zusammen aus einem Anteil tangential zur Anlauffläche 3a und einem Anteil, der weiter in Richtung der ursprünglichen Strömung S verläuft.

Dieser gerade verlaufende Anteil tritt in die Öffnung ein.

Die Figur 2 zeigt die aus Figur 1 bekannte Situation in Strömungsrichtung betrachtet. In der Anlauffläche 3 erkennt man nun die Öffnung, welche über den Kanal 6 in der Verlängerung 4 zum Kopf 5 der Sonde 1 führt.

Aufgrund des schrägen Verlaufes der Anlauffläche 3 ergibt die zylindrische Bohrung des Kanals 6 eine ovale Öffnung. Der schraffiert dargestellte Bereich ist die Innenwand 6a des Kanals 6.

Diese Innenwand 6a ist bezogen auf die Anlauffläche 3 a zurückversetzt. Fremdstoffe, welche sich im strömenden Medium befinden haben kaum die Möglichkeit bis an die zurückversetzte Innenwand 6a zu gelangen, denn der Strömungsanteil der tangential zur Anlauffläche 3a strömt wirkt wie eine Barriere für diese Fremdstoffe.

Die Fremdstoffe haben eine geringe Masse und bringen nicht die kinetische Energie mit, die notwendig wäre, um diese Strömungsbarriere zu durchbrechen um dann auf die Innenwand 6a zu gelangen.

Die Sonde 1 ist bevorzugt so eingebaut, dass die Öffnungen nach unten zeigen, wodurch die auf die Fremdkörper wirkende Schwerkraft und die tangential zur Anlauffläche 3 a verlaufende Strömungskraft in eine annähernd gleiche Richtung wirken. Hierdurch ist es noch unwahrscheinlicher, dass ein Fremdkörber bis an die Wandung 6a gelangt.

In der Ansicht nach Figur 2 ist die schmale Vorderkante 4a der Verlängerung 4 zu sehen. Die Verlängerung 4 hat einen strömungsoptimierten Querschnitt mit einem der Strömung zugewandten spitzen Vorderteil 4a. Anschließend weitet sich der Querschnitt, um ausreichend Platz für die Bohrungen zu bieten und zur strömungsabgewandten Seite hin verjüngt sich der Querschnitt wieder zu einem spitzen Endteil.

Die Schnittlinie IV-IV bezieht sich auf die Darstellung in Figur 4.

Die Figur 3 zeigt einen Blick von unten auf die Sonde 1. In dieser Ansicht ist der symmetrische Aufbau erkennbar. Die Anlauffläche 3a des Differenzdruckerhöhers 3 ist breiter als die Verlängerung 4. Von der Verlängerung 4 ist das spitze Vorderteil 4a und das ebenfalls spitze Endteil 4b sichtbar.

Auf der strömungsabgewandten Seite des Differenzdruckerhöhers 3 befindet sich der Kanal 7.

Der Bereich der Verlängerung 4, in welchem die Kanäle 6 und 7 verlaufen ist in dieser Ansicht durch die Anlauffläche 3 und die Unterdruckseite 3a des Differenzdruckerhöhers 3 verdeckt.

Der Winkel mit dem die Aussenflächen am Vorderteil 4a zusammentreffen beträgt ca. 22 Grad, der Winkel mit dem die Außenflächen 4b am Endteil auslaufen beträgt ebenfalls etwa 22 Grad.

Die Figur 4 zeigt einen Schnitt entlang der Linie IV-IV in Figur 2. Der Querschnitt der Verlängerung 4 ist nur unwesentlich dicker als die Bohrlochweite der Kanäle 6 und 7. Hierdurch wird vorteilhaft erreicht, dass die Sonde 1 einen geringen Strömungswiderstand bietet und nur in dem Bereich der Sonde, in welchem ein Strömungswiderstand für die Funktion der Sonde notwendig ist, tritt der durch den Differenzdruckerhöher hervorgerufene Staudruck auf.

Die Figur 5 zeigt eine weitere Ausgestaltung der Erfindung. Die Ansicht ist in Strömungsrichtung gewählt. Bei dieser Ausführung ist die rampenartige Anlauffläche 3a des Differenzdruckerhöhers 3 breiter gestaltet. Hierdurch ergibt sich ein größerer tangential zur Anlauffläche 3a verlaufender Strömungsanteil.

Wie bereits weiter oben beschrieben wirkt dieser tangential verlaufende Strömungsanteil als Barriere für in der Strömung mitgeführte Fremdstoffe. Eine stärkere Strömung stellt nun auch eine stärkere Barriere dar, die dann wieder geeignet ist, Fremdstoffe mit höherer kinetischer Energie abzuhalten.

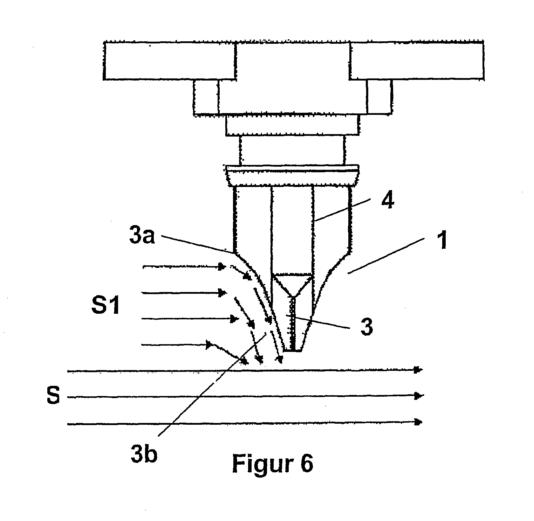

Die Figur 6 zeigt eine Seitenansicht der Sonde 1 mit den Strömungslinien S.

Durch die Anlauffläche 3a wird ein Teil S1 der Strömung S abgelenkt und verläuft als Strömung S1 im wesentlichen tangential zur Anlauffläche 3a. Der abgelenkte Teil S1 der Strömung trifft in einem Winkel, der im wesentlichen dem Neigungswinkel der Anlauffläche 3a entspricht auf die nicht abgelenkte Strömung S. Die nicht abgelenkte Strömung S bietet dem abgelenkten Anteil S1 der Strömung einen Widerstand.

Die Folge ist eine Verminderung der lokalen Strömungsgeschwindigkeit und die Erhöhung des örtlichen Druckes im Bereich 3b. In diesem Bereich 3b befindet sich die Öffnung des Kanals 6.

Diese erfinderische Ausgestaltung der Anlauffläche 3a und das dadurch erreichte, den örtlichen Druck erhöhende Strömungsverhalten im Bereich 3b trägt zur gesamten Wirkung des Differenzdruckerhöhers 3 bei.

Die Dimensionierung der Anlauffläche ist so auf den jeweiligen Anwendungsfall abstimmbar. Bei Messungen in einem Medium, das nur kleine Fremdstoffe mitführt ist eine kleine Anlauffläche notwendig. Eine kleine Anlauffläche hat den Vorteil eines geringeren Strömungswiderstandes.

Eine größere Anlauffläche wird immer dann zum Einsatz kommen, wenn die vorteilhafte Eigenschaft einer stärkeren Barrierewirkung gewünscht wird, um auch größere Fremdstoffe abzuweisen.

Zusätzlich zu den auf Strömungsmechanik basierenden Maßnahmen ist es optional möglich, die Oberfläche der Sonde mit einer Fremdstoffe abweisenden Schicht, etwa sogenannten Nanoteilen auszustatten. Sollte dann doch der eine oder andere Fremdkörper die Wand 6a erreichen, so ist die Gefahr verringert, dass dieser Fremdstoff an der Sonde haften bleibt.

### Gewerbliche Anwendbarkeit

Die Erfindung ist gewerblich anwendbar im Bereich der Strömungsmessung.

## Patentansprüche

1. Staudrucksonde mit zwei Kanälen, die voneinander separiert sind und mit Ihrem einen Ende zu einem Druckmessfühler führen, einem strömungsmechanischen Differenzdruckerhöher (3) und einer Öffnung am jeweils anderen Ende jedes Kanals (6, 7), wobei die Öffnungen an verschiedenen Orten angeordnet sind, zwischen denen ein durch die Wirkung des Differenzdruckerhöhers (3) erzeugter, höherer Wert für den Differenzdruck auftritt, als der Wert des dynamischen Drucks des strömenden Fluids ist, wobei der strömungsmechanische Differenzdruckerhöher (3) eine bezogen auf die Strömungsrichtung des zu messenden Fluids schräge Anlauffläche (3a) aufweist und wobei sich das andere Ende eines der Kanäle (6) in der schrägen Anlauffläche (3a) befindet,
**dadurch gekennzeichnet, dass**
die Staudrucksonde (1) eine Verlängerung (4) aufweist, in welcher die vom Differenzdruckerhöher (3) ausgehenden Kanäle (6, 7) verlaufen, und dass die Anlauffläche (3a) breiter ist als die Verlängerung (4), so dass die Verlängerung (4) einen gegenüber dem Differenzdruckerhöher (3) verringerten Strömungswiderstand aufweist.

2. Staudrucksonde nach Anspruch 1
**dadurch gekennzeichnet, dass**
die Verlängerung (4) an ihrer strömungszugewandten Seite ein spitzes Vorderteil (4a) und an ihrer strömungsabgewandten Seite ein spitzes Endteil (4b) aufweist.

3. Staudrucksonde nach Anspruch 1 oder 2
**dadurch gekennzeichnet, dass**
die Anlauffläche (3a) die auftreffende Anteil der Strömung (S1) ablenkt und der abgelenkte Anteil der Strömung (S1) im wesentlichen tangential zur Oberfläche der Anlauffläche (3a) verläuft.

4. Staudrucksonde nach einem der vorangegangenen Ansprüche
**dadurch gekennzeichnet, dass**
die abgelenkte Strömung (S1) etwa im Bereich (3b) der Öffnung des Kanals (6) auf die nicht abgelenkte Strömung (S) trifft.

5. Staudrucksonde nach einem der vorangegangenen Ansprüche
**dadurch gekennzeichnet, dass**
die Sonde (1) eine Fremdstoffe abweisende Oberfläche aufweist.

6. Staudrucksonde nach einem der vorangegangenen Ansprüche
**dadurch gekennzeichnet, dass**
die Sonde (1) eine Oberfläche aus Nanopartikeln aufweist.

## Claims

1. A ram pressure probe comprising two ducts, which are separated from one another, and which lead with one of their ends to a pressure-measuring sensor, a fluidic differential pressure-increasing element (3) and an opening at the respective other end of each duct (6, 7), wherein the openings are arranged at different locations, between which there is a higher value for the differential pressure, generated by the effect of the differential pressure-increasing element (3), than the value of the dynamic pressure of the flowing fluid, wherein the fluidic differential pressure-increasing element (3) encompasses a stop surface (3a), which is inclined based on the direction of flow of the fluid, which is to be measured, and wherein the other end of one of the ducts (6) is located in the inclined stop surface (3a),
**characterized in that**
the ram pressure probe (1) encompasses an extension (4), in which the ducts (6, 7) run, which start at the differential pressure-increasing element (3), and **in that** the stop surface (3a) is wider than the extension (4), so that the extension (4) encompasses a flow resistance, which is reduced as compared to the differential pressure-increasing element (3).

2. The ram pressure probe according to claim 1,
**characterized in that**
the extension (4) encompasses a pointy front part (4a) at its side facing the flow and a pointy end part (4b) at its side facing away from the flow.

3. The ram pressure probe according to claim 1 or 2,
**characterized in that**
the stop surface (3a) deflects the impacting portion of the flow (S1) and the deflected portion of the flow (S1) runs substantially tangentially to the surface of the stop surface (3a).

4. The ram pressure probe according to one of the preceding claims,
**characterized in that**
the deflected flow (S1) impacts the non-deflected flow (S) approximately in the area (3b) of the opening of the duct (6).

5. The ram pressure probe according to one of the preceding claims,
**characterized in that**
the probe (1) encompasses a surface, which encompasses foreign substances.

6. The ram pressure probe according to one of the preceding claims,
**characterized in that**
the probe (1) encompasses a surface made of nanoparticles.

## Revendications

1. Capteur de pression dynamique, avec deux canaux séparés l'un de l'autre et menant vers un capteur de mesure de pression à l'une de leurs extrémités, un amplificateur de pression différentielle (3) et une ouverture à l'autre extrémité de chacun des canaux (6, 7), dans lequel les ouvertures sont placées à différents endroits, entre lesquels apparaît une valeur de pression différentielle, produite par l'action de l'amplificateur de pression différentielle (3), qui est supérieure à la valeur de la pression dynamique du fluide affluant, dans lequel l'amplificateur de pression différentielle (3) mécanique comporte une surface d'attaque inclinée (3a) par rapport au sens d'écoulement du fluide à mesurer, et dans lequel l'autre extrémité de l'un des canaux (6) se trouve dans la surface d'attaque inclinée (3a),
**caractérisé en ce que**
le capteur de pression dynamique (1) comporte un prolongement (4) dans lequel passent les canaux (6, 7) partant de l'amplificateur de pression différentielle (3), et **en ce que** la surface d'attaque (3a) est plus large que le prolongement (4), de sorte que le prolongement (4) présente une résistance d'écoulement réduite par rapport à l'amplificateur de pression différentielle (3).

2. Capteur de pression dynamique selon la revendication 1,
**caractérisé en ce que**
le prolongement (4) comporte une partie avant pointue (4a) de son côté tourné vers l'écoulement et une partie arrière pointue (4b) de son côté détourné de l'écoulement.

3. Capteur de pression dynamique selon la revendication 1 ou 2,
**caractérisé en ce que**
la surface d'attaque (3a) fait dévier une partie de l'écoulement (S1), et la partie déviée de l'écoulement (S1) s'écoule de manière essentiellement tangentielle par rapport à la face supérieure de la surface d'attaque (3a).

4. Capteur de pression dynamique selon l'une des revendications précédentes,
**caractérisé en ce que**
l'écoulement dévié (S1) rencontre l'écoulement non dévié (S) approximativement dans la région (3b) de l'ouverture du canal (6).

5. Capteur de pression dynamique selon l'une des revendications précédentes,
**caractérisé en ce que**
le capteur (1) présente une surface capable de repousser les matières étrangères.

6. Capteur de pression dynamique selon l'une des revendications précédentes,
**caractérisé en ce que**
le capteur (1) présente une surface en nanoparticules.
